# DEMANDE DE BREVET EUROPEEN

(11) **EP 1 389 574 A1**
(43) Date de publication de la demande: **18.02.2004**
(21) Numéro de dépôt: 03292026.6
(22) Date de dépôt: 13.08.2003
(51) Int. Cl.: B62D 3/12

(54) **Mécanisme de direction à course maximale variable**

(30) Priorité: 13.08.2002 FR 0210280
(71) Demandeur: Renault s.a.s., 92100 Boulogne Billancourt (FR)
(72) Inventeur: Fernandez, José, 78120 Rambouillet (FR)

(57) **Abrégé**

L'invention concerne un mécanisme de direction (45) de véhicule automobile (10) comportant une barre de crémaillère (28) qui est montée coulissante transversalement dans un carter de crémaillère (30), globalement tubulaire, et qui est susceptible d'entraîner au moins une barre de direction (38a, 38b) reliée à une roue directrice (12a) du véhicule (10), du type dans lequel la barre de crémaillère (28) porte deux butées (44a, 44b) dont chacune est susceptible de coopérer avec une extrémité (32a, 32b) du carter (30) pour déterminer, dans les deux sens, une course maximale complète de la barre de crémaillère (28) par rapport au carter de crémaillère (30), caractérisé en ce qu'il comporte des moyens commandés (46, 46a, 46b) pour faire varier la longueur de la course maximale de coulissement de la barre de crémaillère (28) par rapport au carter de crémaillère (30).

## Description

L'invention concerne un mécanisme de direction de véhicule automobile.

L'invention concerne plus particulièrement un mécanisme de direction de véhicule automobile comportant une barre de crémaillère qui est montée coulissante transversalement dans un carter de crémaillère, globalement tubulaire, et qui est susceptible d'entraîner au moins une barre de direction reliée à une roue directrice du véhicule, du type dans lequel la barre de crémaillère porte deux butées dont chacune est susceptible de coopérer avec une extrémité du carter pour déterminer, dans les deux sens, une course maximale complète de la barre de crémaillère par rapport au carter de crémaillère.

Les véhicules automobiles comportent, généralement à l'avant, deux roues directrices chacune logée sous une aile du véhicule, de part et d'autre du compartiment moteur. Il est nécessaire de prévoir un logement de roue entre les ailes et le moteur dont les dimensions permettent le pivotement et le débattement vertical, ou pompage, maximum des roues afin que ces dernières ne viennent pas en contact avec un élément de structure ou de carrosserie du véhicule.

Le débattement vertical maximum est déterminé par le mécanisme de suspension qui relie les roues à la structure du véhicule et qui est notamment destiné à amortir les oscillations de la caisse du véhicule lorsque ce dernier roule sur une route cahoteuse à une vitesse supérieur à un seuil de vitesse, par exemple 15 km/h.

Le pivotement, ou braquage, maximum des roues est déterminé par le mécanisme de direction.

Le logement de roue est notamment dimensionné en prévision de conditions de conduite extrêmes qui n'arrivent que très rarement durant la vie du véhicule. Ainsi, il est rare et risqué qu'un conducteur braque au maximum les roues alors que la vitesse du véhicule est supérieure à une vitesse de seuil, par exemple 15 km/h. Dans ces conditions, la roue qui est braquée au maximum, est susceptible d'avoir un débattement vertical maximum.

La roue peut aussi occasionnellement être équipée de chaînes pour faciliter la conduite sur de la neige. La largeur et la hauteur totales de la roue sont alors augmentées de l'épaisseur des chaînes. Le logement de roue doit donc être suffisamment spacieux pour éviter le frottement des chaînes contre des éléments de structure ou de carrosserie du véhicule.

Une portion du logement de roue est ainsi souvent inutilisée mais demeure indispensable. Cette portion de logement empiète cependant dans l'espace du compartiment moteur.

Pour résoudre ce problème, il est connu de réduire la course maximale de coulissement de la barre de crémaillère pour certaines conditions de roulement du véhicule. Le pivotement maximum des roues directrices est ainsi réduit, sans gêner le conducteur lorsque les conditions de roulement du véhicule sont normales.

Cependant, les solutions existantes ne concernent que des mécanismes de direction commandés ou assistés électriquement.

La présent invention propose un mécanisme de direction du type décrit précédemment, caractérisé en ce qu'il comporte des moyens commandés pour faire varier la longueur de la course maximale de coulissement de la barre de crémaillère par rapport au carter de crémaillère.

Selon d'autres caractéristiques de l'invention :
- le mécanisme de direction comporte au moins une cale escamotable dont les déplacements sont commandés entre :
   - une position active dans laquelle deux faces transversales et opposées formant butoir, qui sont portées par ladite cale, sont susceptibles de coopérer chacune avec une face d'arrêt transversale et opposée qui est portée par la barre de crémaillère, pour déterminer une course maximale réduite dans les deux sens de la barre de crémaillère par rapport au carter de crémaillère ; et
   - une position escamotée dans laquelle la course maximale de la barre de crémaillère est complète ;
- le mécanisme de direction comporte deux cales escamotables qui comportent chacune une face formant butoir et dont chacune, en position active, est intercalée entre une des extrémités du carter de crémaillère et une des butées de la crémaillère formant face d'arrêt ;
- la crémaillère comporte une encoche transversale dont les faces latérales et opposées constituent les faces d'arrêt, et en ce qu'il comporte une cale escamotable dont les deux faces transversales et opposées forment butoirs ;
- la cale est montée articulée par rapport au carter de crémaillère autour d'un axe orthogonal à l'axe longitudinal du carter ;
- la butée escamotable est montée coulissante par rapport au carter de crémaillère selon une direction sensiblement radiale ;
- les déplacements de la cale entre la position escamotée et la position active sont commandés au moyen d'un électroaimant ou d'un moteur électrique ;
- la cale est rappelée élastiquement vers sa position escamotée ;
- les déplacements de la cale entre sa position escamotée et sa position active sont commandés en fonction d'un paramètre représentatif de la vitesse du véhicule ;
- les déplacements de la cale entre sa position escamotée et sa position active sont commandés en fonction de la présence de chaînes sur la roue directrice du véhicule.
- le mécanisme de direction comporte un dispositif pour émettre un signal représentatif de la position active de la cale escamotable.

D'autres caractéristiques et avantages de l'invention apparaîtront au cours de la lecture de la description détaillée qui suit pour la compréhension de laquelle on se reportera aux dessins annexés parmi lesquels :
- la figure 1 est une vue schématique d'un véhicule automobile équipé d'un mécanisme de direction à crémaillère ;
- la figure 2 est une vue en section schématique de derrière de la partie avant gauche du véhicule automobile représenté à la figure 1 selon le plan de coupe 2-2, le véhicule étant ici équipé d'un mécanisme de direction à crémaillère qui est réalisé selon l'état de la technique et qui est notamment relié à une roue directrice avant gauche ;
- la figure 3 est une vue de détail à plus grande échelle du mécanisme de direction à crémaillère de la figure 2 ;
- la figure 4 est la même vue que la figure 2 dans laquelle la roue directrice avant gauche est en position de braquage maximum vers la gauche ;
- la figure 5 est une vue analogue à celle de la figure 3 dans laquelle le mécanisme de direction est équipé de cales réalisées selon les enseignements de l'invention ;
- la figure 6 est la même vue que la figure 5 dans laquelle les cales sont en position active et la barre de crémaillère est en position de coulissement maximum vers la droite par rapport au carter de crémaillère ;
- la figure 7 est la même vue que la figure 2 dans laquelle le véhicule est équipé du mécanisme de direction représenté à la figure 6 ;
- la figure 8 représente une variante de réalisation du mécanisme de direction réalisé selon les enseignements de l'invention.

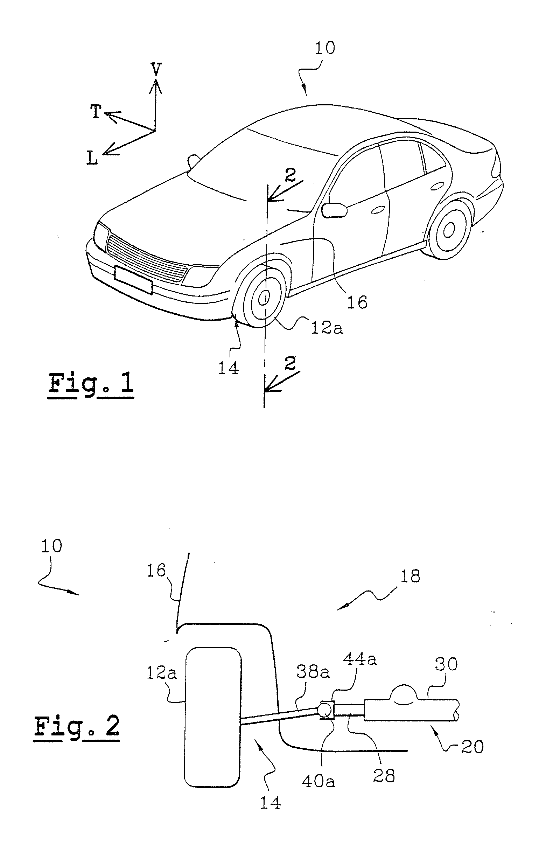

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Dans la description, des éléments identiques, analogues ou similaires seront désignés par les mêmes références.

La figure 1 est une vue schématique qui représente un véhicule automobile 10 qui comporte ici une roue 12a logée dans un logement de roue 14, sous une aile avant gauche 16.

Le logement de roue 14 est délimité vers le haut par l'aile avant gauche 16 et latéralement vers la droite par un compartiment moteur 18.

Le véhicule automobile 10 comporte ici un mécanisme de direction 20 qui est réalisé selon l'état de la technique et qui est situé dans le compartiment moteur 18 entre les deux roues directrices avant gauche 12a et avant droite (non représentée) dont il commande le pivotement simultané par rapport au véhicule autour d'un axe sensiblement vertical.

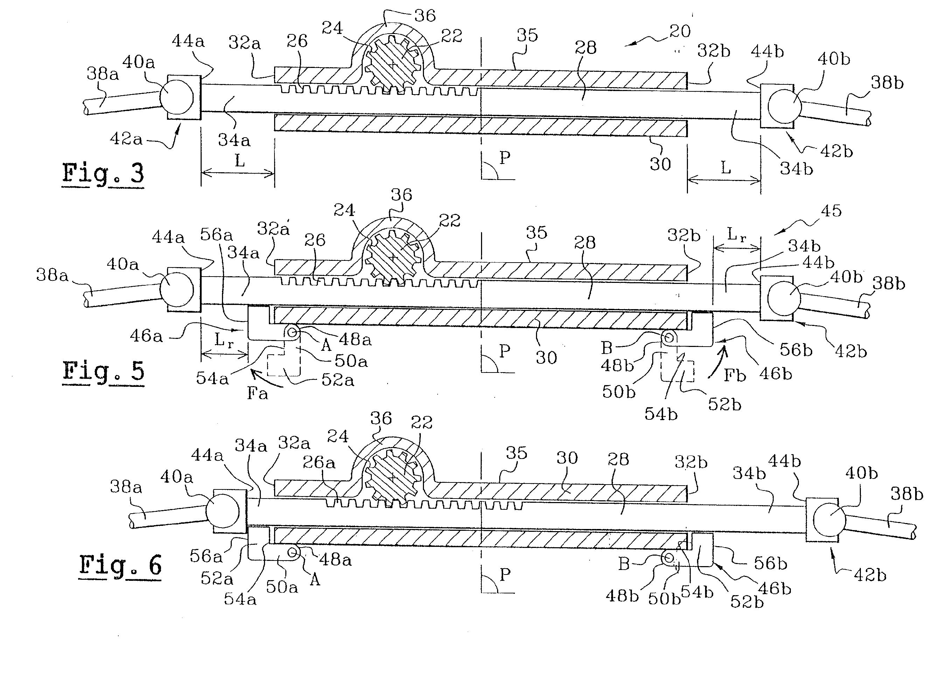

Le mécanisme de direction 20 à la figure 3 comporte un pignon 22 qui est commandé par un volant de direction (non représenté). Le pignon 22 comporte une denture 24 qui est destinée à coopérer avec des crans 26 d'une barre de crémaillère transversale 28. La barre de crémaillère 28 est montée coulissante transversalement dans un carter de crémaillère 30 globalement tubulaire.

Dans les paragraphes qui suivent, deux éléments identiques du mécanisme de direction 20 et agencés symétriquement à la partie à gauche du plan P et à droite du plan P, respectivement, sont désignés par un même chiffre de référence suivi respectivement de la lettre « a » et « b ».

Le carter de crémaillère 30 est ici fixe par rapport à la structure du véhicule 10. II comporte deux extrémités latérales gauche 32a et droite 32b ouvertes desquelles dépassent deux tronçons extrêmes gauche 34a et droit 34b de la barre de crémaillère 28 selon l'orientation de la figure 3. Une face axiale externe 35 du carter 30 comporte ici un logement 36 dans lequel est reçu le pignon 22.

Les tronçons extrêmes 34a et 34b de la barre de crémaillère 28 sont globalement symétriques par rapport à un plan médian P longitudinal et transversal qui divise la barre de crémaillère 28 en deux parties égales gauche et droite.

Une barre de direction 38a, 38b est montée articulée par une rotule 40a, 40b sur une extrémité 42a, 42b de la barre de crémaillère 18. La barre de direction 38a, 38b relie la barre de crémaillère 28 à une roue directrice 12a.

Le tronçon extrême 34a, 34b de la barre de crémaillère 28 porte ici une butée 44a, 44b qui est orientée transversalement en regard de l'extrémité latérale 32a, 32b du carter 30 avec laquelle la butée 44a, 44b est destinée à coopérer. La butée 44a, 44b est avantageusement réalisée en matériau élastomère afin d'amortir un éventuel choc lors du contact entre la butée 44a, 44b et le carter 30.

Ainsi, en considérant le mécanisme de direction 20 dans son ensemble, les butées 44a et 44b déterminent, dans les deux sens, une course maximale de longueur L de la barre de crémaillère 28 par rapport au carter de crémaillère 30.

Lors d'un changement de direction, le conducteur tourne le volant de direction qui commande la rotation du pignon 22 qui entraîne en coulissement la barre de crémaillère 28 par rapport au carter de crémaillère 30. La barre de crémaillère 28 tire ou pousse les barres de direction 38a et 38b qui font pivoter les roues directrices.

Le braquage maximum des roues directrices est déterminé par la longueur L de la course de la barre de crémaillère 28 par rapport au carter de crémaillère 30. Ainsi, lorsque le conducteur commande le braquage maximum des roues, la barre de crémaillère 28 coulisse dans le carter de crémaillère 30 jusqu'à ce qu'une des butées 44a ou 44b entre en contact avec une des extrémités latérales 32a ou 32b du carter 30 respectivement.

On a représenté à la figure 4 la conséquence d'un braquage maximum vers la gauche sur la roue directrice 12a. Le braquage étant le même quelles que soient les conditions de roulement du véhicule 10, il est nécessaire de préserver un espace latéral interne 43 entre la roue 12a et le compartiment moteur 18 pour le cas dans lequel la roue 12a est équipée de chaînes.

La figure 4 représente aussi en trait interrompu la roue 12a en position de braquage et de débattement vertical maxima. Il est alors nécessaire de prévoir un espace supérieur 47 pour cette configuration rare, mais possible.

On a représenté à la figure 5 un mécanisme de direction 45 réalisé selon les enseignements de l'invention. Ce mécanisme 45 est globalement similaire à celui décrit précédemment qui est représenté à la figure 3. Ce mécanisme de direction 45 comporte deux cales escamotables 46a et 46b supplémentaires qui sont agencées symétriquement par rapport au plan médian P. Chaque cale est commandée entre une position escamotée et une position active.

Chaque cale 46a, 46b a globalement la forme d'un « L » qui comporte ici une première extrémité de fixation 48a, 48b qui est montée pivotante sur la paroi axiale à une extrémité du carter autour d'un axe A, B qui est orthogonal à l'axe transversal de la barre de crémaillère 28.

Dans la position escamotée qui est représentée en trait interrompu sur la figure 5, une première branche de fixation 50a, 50b du « L » s'étend à partir de l'extrémité de fixation 48a, 48b de façon orthogonale à la fois à l'axe de pivotement A, B de la cale 46a, 46b et à l'axe transversal de coulissement de la barre de crémaillère 28. La première branche de fixation 50a, 50b porte une seconde branche libre 52a, 52b du « L » qui s'étend ici perpendiculairement à la première branche 50a, 50b en direction de l'extrémité de la barre de crémaillère 42a, 42b et qui forme une encoignure 54a, 54b avec la première branche de fixation 50a, 50b.

Dans la position active de la cale, qui est représentée en trait continu sur la figure 5, la branche de fixation 50a, 50b de la cale 46a, 46b est sensiblement plaquée contre la paroi axiale 35 du carter 30. L'encoignure 54a, 54b de la cale 46a, 46b épouse alors sensiblement l'extrémité latérale 32a, 32b du carter 30 de façon que la branche libre 52a, 52b de la cale 46a, 46b soit intercalée entre l'extrémité latérale 32a, 32b du carter 30 et la butée 44a, 44b de la barre de crémaillère 28.

Une face 56a, 56b de la branche libre 52a, 52b en regard de la butée 44a, 44b forme un butoir destiné à coopérer avec la butée 44a, 44b.

Les déplacements de la cale 46a, 46b entre la position escamotée et la position active sont par exemple commandés au moyen d'un moteur électrique.

Dans une variante de l'invention, les mouvements de la cale 46a, 46b sont commandés au moyen d'un électro-aimant entre la position escamotée et la position active. La cale 46a, 46b est rappelée élastiquement vers une des positions escamotée ou active, par exemple vers la position escamotée.

Nous allons à présent décrire le fonctionnement d'un tel mécanisme de direction 45.

Tant que les cales 46a, 46b sont en position escamotée, le mécanisme de direction 45 fonctionne comme le mécanisme de direction 20 réalisé selon l'état de la technique. La course maximale de la barre de crémaillère est alors complète et a une longueur L dans les deux sens.

Les déplacements de la cale 46a, 46b entre sa position escamotée et sa position active sont notamment commandés en fonction d'un paramètre représentatif de la vitesse de roulement du véhicule. Ainsi lorsque la vitesse du véhicule 10 dépasse un seuil de vitesse, par exemple de 15 km/h, les cales sont pivotées en position active.

Les cales gauche 46a et droite 46b pivotent autour de leur axe respectif A, B dans un sens horaire et anti-horaire respectivement, indiqué par les flèches Fa et Fb de la figure 5. La course maximale de la barre de crémaillère 28 a ainsi une longueur réduite Lᵣ dans les deux sens.

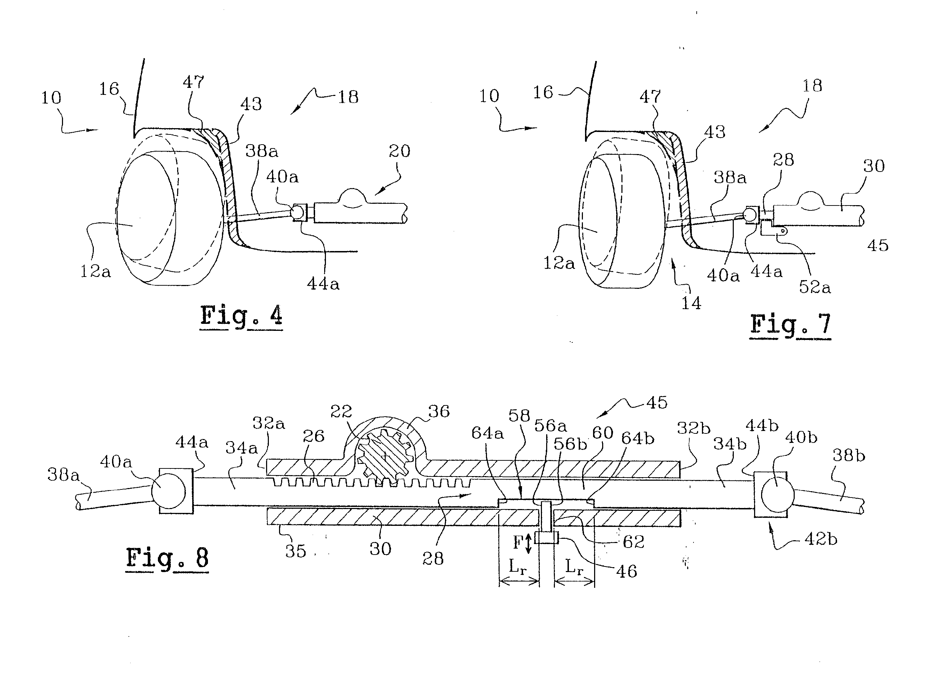

Quand le conducteur commande le braquage maximum des roues alors que les cales 46a, 46b sont en position active, la barre de crémaillère 28 coulisse transversalement par rapport au carter 30, par exemple vers la droite comme représenté à la figure 6. La face d'arrêt de la butée 44a portée par le tronçon extrême droit 34a de la barre de crémaillère 28 entre alors en contact avec le butoir 56a portée par la cale droite 46a et bloque la course de la barre de crémaillère 28 vers la gauche et donc le pivotement des roues. Les conséquences de cette opération sont visibles à la figure 7.

L'invention permet ainsi de limiter le pivotement des roues directrices lorsque le véhicule 10 roule à une allure supérieure au seuil de vitesse. Grâce à cette invention, la roue ne peut à aucun moment atteindre la zone 47 du logement de roue illustrée à la figure 7. En effet, si le véhicule roule à une allure inférieure au seuil de vitesse, la roue n'a pas un débattement vertical maximum lorsqu'elle rencontre un cahot. En revanche, lorsque le véhicule roule à une allure supérieure au seuil de vitesse, la rencontre d'un cahot est susceptible de se traduire par un débattement vertical maximum, mais la roue ne peut braquer au maximum.

Dans une autre variante de l'invention, les déplacements de la cale 46a, 46b sont notamment commandés en fonction de la présence de chaîne sur les roues directrices du véhicule 10. Avec un mécanisme de direction 20 selon l'état de la technique il est nécessaire de prévoir une zone 43 dans le logement de roue pour le passage des chaînes lorsque la roue est braquée au maximum.

Avec le mécanisme de direction 45 selon les enseignements de l'invention, le braquage maximum des roues est réduit lorsqu'elles sont équipées de chaînes, il n'est donc plus nécessaire de conserver la zone 43 qui peut alors faire partie du compartiment moteur 18.

Dans une variante de l'invention non représentée, les cales portant les butoirs sont montées coulissantes par rapport au carter de direction selon une direction globalement radiale.

Dans une autre variante de l'invention représentée à la figure 8, la barre de crémaillère 28 comporte une encoche tranversale 58 qui est ici située sur une partie 60 de la barre de crémaillère 28 qui est contenue dans le carter de crémaillère 30. Le carter de crémaillère 30 comporte un orifice de passage 62 d'une cale 46 coulissante selon une direction radiale qui est ici verticale. La cale 46 comporte deux faces transversales 56a, 56b, formant butoirs, qui sont destinées à coopérer avec deux faces transversales internes 64a, 64b de l'encoche 58 formant des faces d'arrêt.

La figure 7 illustre ici la cale 46 en position active. La position escamotée de la cale 46 est obtenue en faisant coulisser cette dernière vers le bas, selon la direction indiquée par la flèche F de la figure 7. La cale 46 est commandée entre sa position active et sa position escamotée par des moyens similaires à ceux décrits dans les modes de réalisation précédents.

Lorsque la cale 46 est en position escamotée, le fonctionnement du mécanisme de direction 45 est analogue à celui du mécanisme de direction 20 selon l'état de la technique.

Lorsque la cale 46 est en position active, la course transversale de la barre de crémaillère 28 a une longueur réduite Lr dans les deux sens. En effet, si le conducteur essaie de braquer les roues 12a au maximum, la face d'arrêt 64a, 64b de l'encoche coopère avec le butoir 56a, 56b de la cale pour limiter le coulissement de la barre de crémaillère 28 par rapport au carter 30.

Selon une autre variante non représentée, un signal est émis, par exemple par un capteur de position, lorsque la cale 46 ou les cales 46a et 46b sont en position active, afin d'informer le conducteur de la limitation du rayon de braquage du véhicule, par exemple par l'illumination d'un voyant lumineux situé sur la planche de bord du véhicule.

## Revendications

1. Mécanisme de direction (45) de véhicule automobile (10) comportant une barre de crémaillère (28) qui est montée coulissante transversalement dans un carter de crémaillère (30), globalement tubulaire, et qui est susceptible d'entraîner au moins une barre de direction (38a, 38b) reliée à une roue directrice (12a) du véhicule (10), du type dans lequel la barre de crémaillère (28) porte deux butées (44a, 44b) dont chacune est susceptible de coopérer avec une extrémité (32a, 32b) du carter (30) pour déterminer, dans les deux sens, une course maximale complète de la barre de crémaillère (28) par rapport au carter de crémaillère (30),
**caractérisé en ce qu'**il comporte des moyens commandés (46, 46a, 46b) pour faire varier la longueur de la course maximale de coulissement de la barre de crémaillère (28) par rapport au carter de crémaillère (30).

2. Mécanisme de direction (45) selon la revendication précédente, **caractérisé en ce qu'**il comporte au moins une cale escamotable (46, 46a, 46b) dont les déplacements sont commandés entre :
- une position active dans laquelle deux faces transversales et opposées (56a, 56b) formant butoir, qui sont portées par ladite cale (46, 46a, 46b), sont susceptibles de coopérer chacune avec une face d'arrêt transversale et opposée (44a, 44b, 64a, 64b) qui est portée par la barre de crémaillère (28), pour déterminer une course maximale réduite dans les deux sens de la barre de crémaillère (28) par rapport au carter de crémaillère (30) ; et
- une position escamotée dans laquelle la course maximale de la barre de crémaillère (28) est complète.

3. Mécanisme de direction (45) selon la revendication précédente, **caractérisé en ce qu'**il comporte deux cales escamotables (46a, 46b) qui comportent chacune une face (56a, 56b) formant butoir et dont chacune, en position active, est intercalée entre une des extrémités (32a, 32b) du carter de crémaillère (30) et une des butées (44a, 44b) de la crémaillère formant face d'arrêt.

4. Mécanisme de direction (45) selon la revendication 2, **caractérisé en ce que** la crémaillère comporte une encoche transversale (58) dont les faces latérales et opposées (64a, 64b) constituent les faces d'arrêt, et **en ce qu'**il comporte une cale escamotable (46) dont les deux faces transversales et opposées (56a, 56b) forment butoirs.

5. Mécanisme de direction (45) selon l'une des revendication 2 à 4, **caractérisé en ce que** la cale (46a, 46b) est montée articulée par rapport au carter de crémaillère (30) autour d'un axe (A, B) orthogonal à l'axe longitudinal du carter (30).

6. Mécanisme de direction (45) selon l'une des revendications 2 à 4, **caractérisé en ce que** la butée escamotable (46) est montée coulissante par rapport au carter de crémaillère (30) selon une direction sensiblement radiale.

7. Mécanisme de direction (45) selon l'une des revendications 2 à 6, **caractérisé en ce que** les déplacements de la cale (46, 46a, 46b) entre la position escamotée et la position active sont commandés au moyen d'un électroaimant ou d'un moteur électrique.

8. Mécanisme de direction (45) selon la revendication précédente, **caractérisé en ce que** la cale (46, 46a, 46b) est rappelée élastiquement vers sa position escamotée.

9. Mécanisme de direction (45) selon l'une des revendications précédentes, **caractérisé en ce que** les déplacements de la cale (46, 46a, 46b) entre sa position escamotée et sa position active sont commandés en fonction d'un paramètre représentatif de la vitesse du véhicule (10).

10. Mécanisme de direction (45) selon l'une des revendications précédentes, **caractérisé en ce que** les déplacements de la cale (46, 46a, 46b) entre sa position escamotée et sa position active sont commandés en fonction de la présence de chaînes sur la roue directrice (12a) du véhicule (10).

11. Mécanisme de direction (45) selon l'une des revendications 2 à 10, **caractérisé en ce qu'**il comporte un dispositif pour émettre un signal représentatif de la position active de la cale escamotable (46, 46a, 46b).
